# EUROPÄISCHE PATENTSCHRIFT

(11) **EP 2 632 687 B1**
(45) Veröffentlichungstag und Bekanntmachung des Hinweises auf die Patenterteilung: **16.03.2016**
(21) Anmeldenummer: 11763950.0
(22) Anmeldetag: 01.10.2011
(51) Int. Cl.: B29C 47/90, B29C 47/34, B29C 47/92

(54) **VORRICHTUNG ZUM FÜHREN UND/ODER FORMEN EINES EXTRUDIERTEN KUNSTSTOFFSTRANGES**
APPARATUS FOR GUIDING AND/OR FORMING AN EXTRUDED STRAND OF PLASTIC
DISPOSITIF POUR LE GUIDAGE ET/OU LE FAÇONNAGE D'UN BOUDIN DE MATIÈRE PLASTIQUE EXTRUDÉ

(30) Priorität: 25.10.2010 DE 102010042862
(43) Veröffentlichungstag der Anmeldung: 04.09.2013
(73) Patentinhaber: battenfeld-cincinnati Germany GmbH, 32547 Bad Oeynhausen (DE)
(72) Erfinder: DOHMANN, Heinrich, 37671 Höxter (DE); GESPER, Thomas, 33129 Delbrück (DE)
(86) Internationale Anmeldenummer: PCT/EP2011/067205
(87) Internationale Veröffentlichungsnummer: WO 2012/055676

(56) Entgegenhaltungen:
- EP-A1- 1 254 757
- WO-A2-2010/105598
- DE-A1-102004 052 972

## Beschreibung

Die Erfindung betrifft eine Vorrichtung zum Führen und/oder Formen eines Kunststoffstranges und/oder eines Kunststoffprofiles, vorzugsweise eines Kunststoffrohres, die einen Bereich mit veränderbarem Querschnitt und Mittel zum Verändern des Bereiches mit veränderbarem Querschnitt aufweist, wobei der Bereich mit veränderbarem Querschnitt aus einem gewickelten Flachmaterial oder mehreren Lagen eines oder unterschiedlicher Materialen gebildet wird, wobei das gewickelte Flachmaterial oder die mehreren Lagen eines oder unterschiedlicher Materialen in Teilbereichen überlappt und im überlappenden Bereich eng aneinander liegt.

Aus der DE 10 2004 052 972 A1 ist ein gewickeltes Flachmaterial bekannt, dass bei der Kalibrierung von extrudierten Kunststoffrohren zum Einsatz kommt. Das Flachmaterial überlappt in Teilbereichen und liegt im Überlappungsbereich eng aneinander. Eine ähnliche Vorrichtung ist aus der DE 10 2007 026 309 bekannt, auch hier liegen Teilbereich eng übereinander. Je größer die Überlappungflächen sind und je größer die Berührungsflächen des Flachmaterials zum Kunststoffrohr sind, je größer ist die auftretende Reibung.

**Aufgabe** der vorliegend Erfindung ist es, ein System vorzuschlagen bei dem die auftretende Reibung minimiert wird.

Die **Lösung** der Aufgabe zur Vorrichtung ist in Verbindung mit dem Oberbegriff des Anspruchs 1 dadurch gekennzeichnet, dass das Flachmaterial mit einer flexiblen und elastisch verformbaren Schicht versehen ist, wobei die Schicht eine Härte von mehr als 1500 Vickers aufweist.

Durch diese Beschichtung wird der Reibwert der sich berührenden Flächen verringert. Das Besondere an dieser Schicht ist, dass sie elastisch ist und damit die Änderungen im Radius bei der Querschnittsveränderung problemlos mitmacht.

Weitere vorteilhafte Weiterbildungen der Beschichtung sind in den Unteransprüchen wiedergegeben.

Mittels dieser Vorrichtung wird erreicht, dass eine gute Haftung erreicht wird und die guten Gleiteigenschaften erhalten bleiben, wobei das Beschichtungsmaterial nicht durch erhöhte Temperaturen geschädigt wird.

In den Zeichnungen sind schematisch Ausführungsbeispiel als Kalibriervorrichtungen dargestellt, es zeigt
- Fig. 1: das gewickelte Blech mit dem Mittel zum Verändern des veränderbaren Querschnittes,
- Fig. 2: eine Seitenansicht der Figur 1,
- Fig. 3: einen vergrößerten Teilbereich der Figur 1,
- Fig. 4: zeigt den veränderbaren Querschnitt im abgewickelten Zustand,
- Fig. 5: eine alternative Ausführung,
- Fig. 6: ein anderes Ausführungsbeispiel zum Einsatz als Teil eines Rohrkopfes und

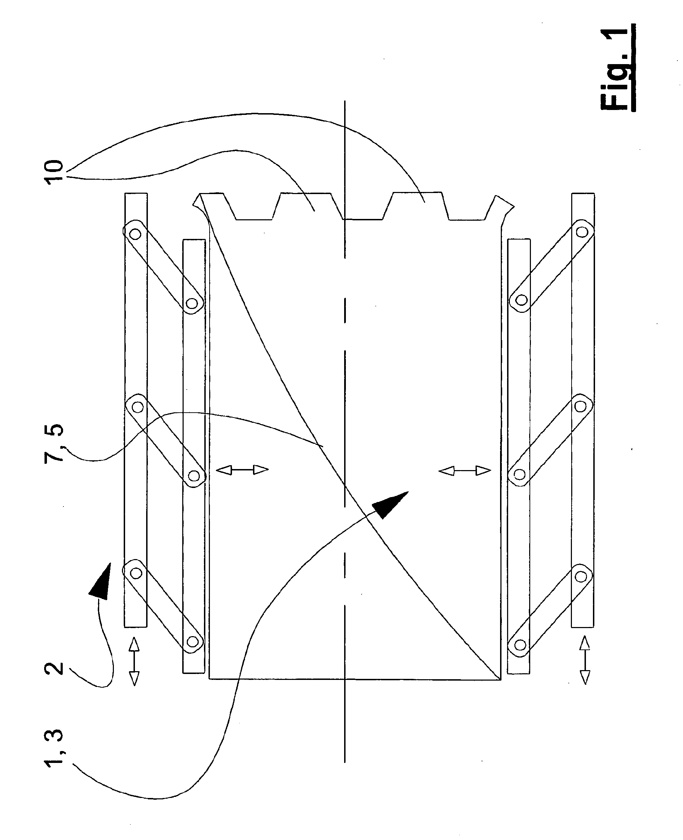

Figur 1 zeigt schematisch ein Ausführungsbeispiel der Erfindung, wenn sie in einer Kalibriereinrichtung zum Einsatz gelangt. Die Vorrichtung zeigt einen Bereich mit veränderbarem Querschnitt 1, der als ein gewickeltes Flachmaterial 3 ausgeführt ist. Um diesen Bereich sind Mittel 2 zum Verändern des Bereiches mit veränderbarem Querschnitt 1 angeordnet. In diesem Ausführungsbeispiel sind dies verschiebbare Stangenelemente. In dieser Schnittdarstellung ist deutlich erkennbar, dass das innere Ende 7 des Flachmaterials 3 einen schrägen Verlauf 5 aufweist, der schraublinienförmig um die Extrusionsachse verläuft, damit Fließmarkierungen verwischt werden und somit weitgehend unsichtbar sind. Durch Verschieben der Stangenelemente als Mittel zum Verändern des Bereiches mit veränderbarem Querschnitt 1 zueinander (durch die jeweiligen Doppelpfeile verdeutlicht) wird das Flachmaterial 3 stärker oder weniger stark gewickelt (ebenfalls durch die Doppelpfeile dargestellt) und der Querschnitt geweitet oder verengt. Zur Vereinfachung der Führung des Kunststoffstranges sind Laschen 10 an einer Stirnseite des Flachmaterials 3 angeordnet.

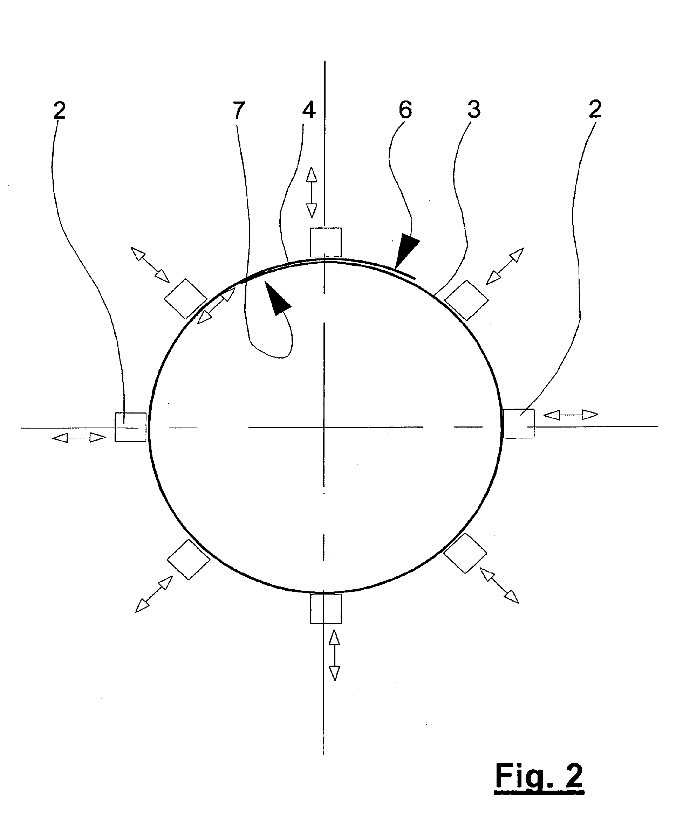

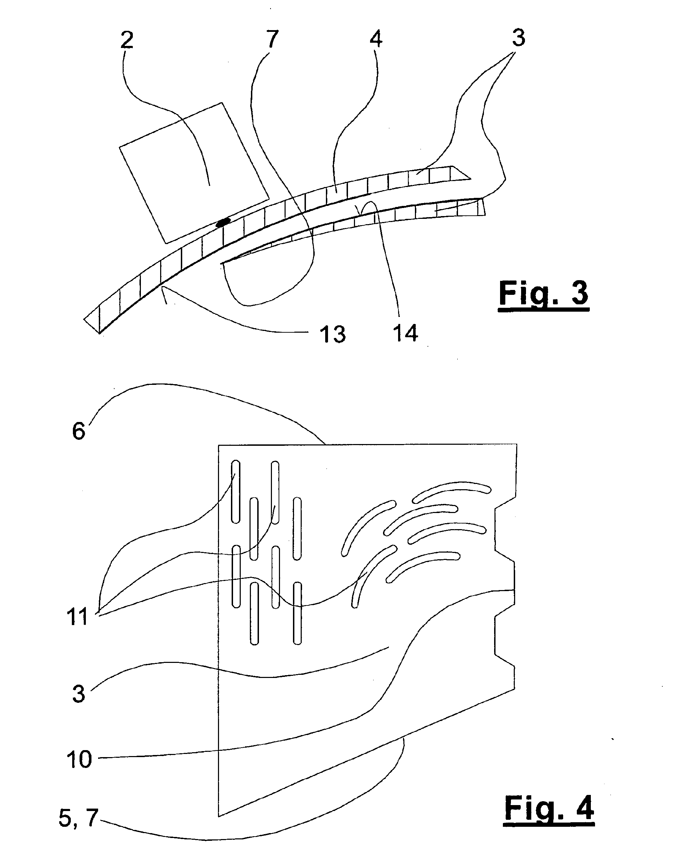

Figur 2 ist eine Seitenansicht von Figur 1 und verdeutlicht die um den Bereich mit veränderbarem Querschnitt 1 angeordneten Mittel 2 zum Verändern. Auch hier ist zu sehen, dass sich das Flachmaterial 3 in Teilbereichen 4 überlappt. In der Einzelheit gemäß Figur 3 ist zu sehen, dass das äußere Ende 6 des Flachmaterials 3 mit dem Mittel 2 zum Verändern des Bereiches mit veränderbarem Querschnitt 1 verbunden ist. Das innere Ende 7 nimmt in seiner Materialstärke kontinuierlich ab, um einen möglichst gleichmäßigen Übergang zu schaffen.

In dieser Figur ist auch die Beschichtung durch eine dickere Linie verdeutlicht. Das Flachmaterial 3 hat auf seiner äußeren Seite die Beschichtung 14 und auf der inneren Seite die Beschichtung 13 die hier nur partiell im Überlappungsbereich ausgeführt ist. Selbstverständlich kann sich die Beschichtung auch über das gesamte Flachmaterial 3 erstrecken.

In Figur 4 wird das Flachmaterial 3 im abgewickelten Zustand gezeigt. Erkennbar ist wieder der schräge Verlauf 5 des inneren Bereiches 7 sowie die auf einer Seite angeordneten Laschen 10. Angedeutet wurden die einzubringenden Lochungen 11, die hier als Langloch oder sichelförmig mit veränderbarem Winkel zur Extrusionsachse ausgeführt sind.

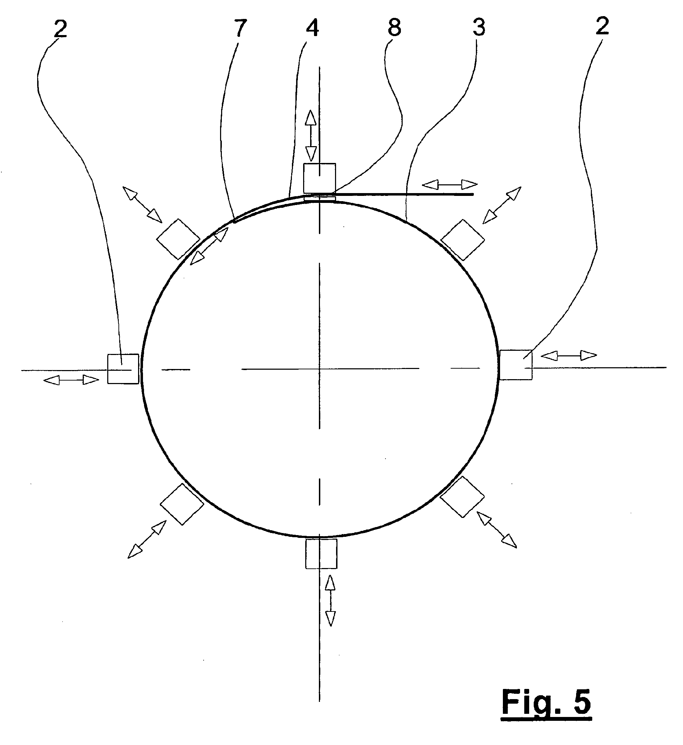

Das Ausführungsbeispiel nach Figur 5 entspricht im Wesentlichen der Figur 2 mit dem Unterschied, dass hier das Flachmaterial 3 durch eine Aussparung 8 im Mittel 2 zum Verändern des veränderbaren Querschnittes 1 geführt wird. Dies hat den Vorteil, dass die Möglichkeit geschaffen wird, je nach Anwendungsfall den überlappenden Bereich 4 so klein wie möglich zu halten.

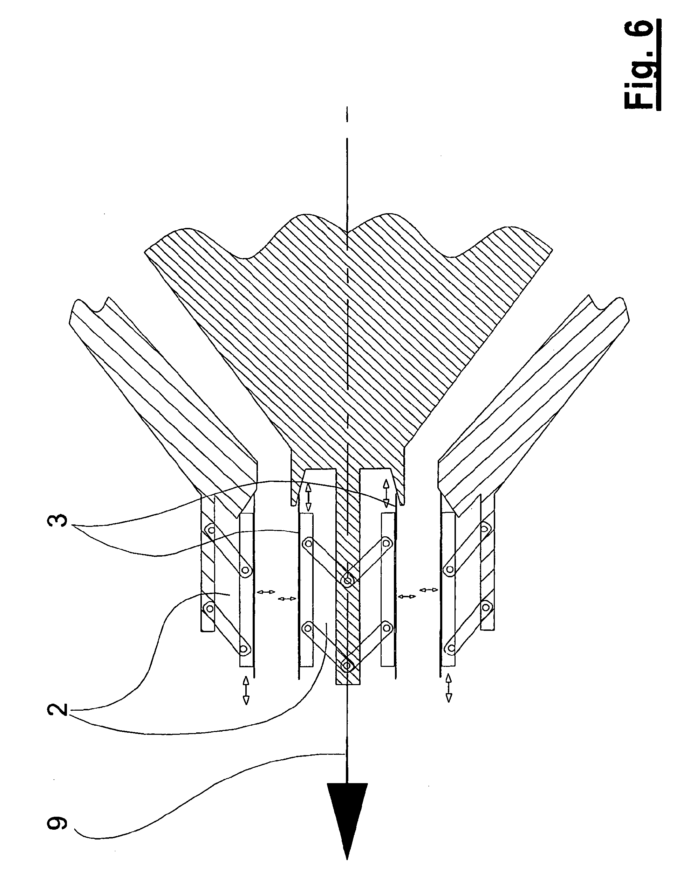

In der Figur 6 wird ein weiteres Beispiel dargestellt, bei dem die erfindungsgemäße Vorrichtung als Teil eines Rohrkopfes dargestellt ist. Ein erstes gewickeltes Flachmaterial bildet einen inneren Querschnitt für den Dorn des Rohrkopfes und ein zweites gewickeltes Flachmaterial bildet einen äußeren Querschnitt für die Hülse des Rohrkopfes. Das Flachmaterial überlappt in Teilbereichen, die Verstellung erfolgt gleichermaßen über die Mittel 2, die sowohl am inneren Querschnitt als auch am äußeren Querschnitt angeordnet sind. Auch sollen die jeweiligen Doppelpfeile die Bewegungsrichtung der Stangen bzw. die Veränderung des Querschnittes verdeutlichen. Bei der Anordnung der Mittel 2 für den äußeren Querschnitt ist darauf zu achten, dass im Bereich des Rohrkopfes das Flachmaterial hervorsteht. Bei entsprechender Ausgestaltung des Ende des Rohrkopfes bildet dieser Überstand eine Abdichtung gegenüber der Schmelze nach außen.

Alternativ zur Ausführung des Flachmaterials 3 gemäß Figur 4, in der Lochungen für das Anlegen des Vakuums eingebracht wurden, kann das Flachmaterial 3 in Form einer Vielzahl von miteinander verbundenen Streifen 12 ausgeführt sein. Diese Ausführung des Flachmaterials 3 kann ebenso gewickelt werden, wobei durch geeignete Ortswahl der zwischen den Streifen 12 angebrachten Stege und damit verbundenen Lage des inneren Endes 7 des Flachmaterials 3 ebenfalls ein schräger Verlauf 5 realisiert werden kann. Jeder einzelne Streifen 12 hat dann einen überlappenden Bereich 4.

### Bezugszeichenliste:

- 1: veränderbarer Querschnitt
- 2: Mittel zum Verändern von 1
- 3: Flachmaterial
- 4: überlappender Bereich von 3
- 5: schräger Verlauf
- 6: äußerer Bereich von 3
- 7: inneres Ende von 3
- 8: Aussparung
- 9: Extrusionsrichtung
- 10: Laschen
- 11: Lochung
- 12: Streifen zur Bildung von 3
- 13: Beschichten auf Innenseite von 3
- 14: Beschichtung auf Außenseite von 3

## Patentansprüche

1. Vorrichtung zum Führen und/oder Formen eines Kunststoffstranges und/oder eines Kunststoffprofiles, vorzugsweise eines Kunststoffrohres,
die einen Bereich mit veränderbarem Querschnitt (1) und Mittel (2) zum Verändern des Bereiches mit veränderbarem Querschnitt (1) aufweist,
wobei der Bereich mit veränderbarem Querschnitt (1) aus einem gewickelten Flachmaterial oder mehreren Lagen eines oder unterschiedlicher Materialen gebildet wird,
wobei das gewickelte Flachmaterial (3) oder die mehreren Lagen eines oder unterschiedlicher Materialen in Teilbereichen überlappt und im überlappenden Bereich (4) eng aneinander liegt,
**dadurch gekennzeichnet, dass**
das Flachmaterial (3) mit einer flexiblen und elastisch verformbaren Schicht (13, 14) versehen ist,
wobei die Schicht (13, 14) eine Härte von mehr als 1500 Vickers aufweist.

2. Vorrichtung nach Anspruch 1, **dadurch gekennzeichnet, dass** die Beschichtung gute Hafteigenschaften zum Flachmaterial besitzt.

3. Vorrichtung nach einem der vorigen Ansprüche, **dadurch gekennzeichnet, dass** die Beschichtung chemisch isolierend und/oder korrosionshemmend ist.

4. Vorrichtung nach einem der vorigen Ansprüche, **dadurch gekennzeichnet, dass** die Beschichtung in einem Temperaturbereich aufgetragen ist, die unterhalb der Anlasstemperatur des Flachmaterials liegt.

## Claims

1. Apparatus for the forming and or/the guiding of a plastic string and/or a plastic profile, primarily a plastic tube,
featuring a section with adaptable diameter (1) and means for the modification of the section with adaptable diameter (1),
the section with adaptable diameter (1) being made of a wrapped flat material or a number of layers of one or several different materials, the wrapped flat material (3) or the number of layers of one or several different materials overlapping in sections and being very close to one another in the overlapping sections (4),
**characterized in that**
the flat material (3) is furnished with a flexible and elastically deformable layer (13, 14),
the layer (13, 14) featuring a hardness of more than 1500 Vickers.

2. Apparatus according to claim 1, **characterized in that** the coating displays good adhesion to the flat material.

3. Apparatus according to one of the preceding claims, **characterized in that** the coating is chemically isolating and/or anticorrosive.

4. Apparatus according to one of the preceding claims, **characterized in that** the coating is applied within a temperature range below the annealing temperature of the flat material

## Revendications

1. Dispositif de guidage et/ou de mise en forme d'un cordon en matière plastique et/ou d'un profilé en matière plastique, de préférence d'un tube plastique,
ledit dispositif présentant une section à diamètre variable (1) ainsi que des moyens pour la modification de ladite section à diamètre variable,
la section à diamètre variable (1) étant formée d'un matériau en feuille enroulé ou de plusieurs couches d'un seul ou de différents matériaux, ledit matériau en feuille enroulé (3) ou les plusieurs couches d'un seul ou de différents matériaux se recouvrant les uns les autres et étant très proches les uns des autres,
**le dispositif caractérisé en ce que**
le matériau en feuille enroulé (3) étant recouvert d'une couche flexible et élastiquement déformable (13, 14)
la couche (13, 14) présentant une dureté Vickers de plus de 1500.

2. Dispositif selon revendication 1, **caractérisé en ce que** le revêtement présente de bonnes propriétés d'adhésion avec le matériau en feuille enroulé.

3. Dispositif selon l'une quelconque des revendications précédentes, **caractérisé en ce que** le revêtement est chimiquement isolant ou anticorrosif.

4. Dispositif selon l'une quelconque des revendications précédentes, **caractérisé en ce que** le revêtement a été appliqué dans une plage de températures inférieures à la température de revenu du matériau en feuille enroulé.
